# FASCICULE DE BREVET EUROPEEN

(11) **EP 0 359 659 B1**
(45) Date de publication et mention de la délivrance du brevet: **21.04.1993**
(21) Numéro de dépôt: 89402494.2
(22) Date de dépôt: 13.09.1989
(51) Int. Cl.: F16C 35/063, F16D 1/06

(54) **Accouplement d'un arbre dans un support de palier de turbomachine et procédé de désaccouplage**
Wellenkupplung in einer Lagerstütze einer Turbomaschine und Verfahren zur Entkupplung
Shaft coupling in a bearing support of a turbo machine, and method of uncoupling

(30) Priorité: 14.09.1988 FR 8811959
(43) Date de publication de la demande: 21.03.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Marey, Daniel Jean, F-91450 Soisy Sur Seine (FR)
(74) Mandataire: Moinat, François

(56) Documents cités:
- DE-A- 2 844 842
- DE-B- 1 500 915
- FR-A- 2 571 105
- US-A- 3 602 535

## Description

L'invention concerne l'accouplement d'un arbre tubulaire monté à l'intérieur d'un palier comportant une butée à billes insérée entre, extérieurement, un support de palier et intérieurement, un fourreau solidaire de l'arbre.

Un tel accouplement est déja connu, par exemple par le DE-A-2 844 842 qui montre un accouplement d'un arbre dans un palier comportant une butée à billes sur la bague interne de laquelle l'arbre est maintenu au moyen d'épaulements ménagés respectivement sur l'arbre et sur un fourreau rendu solidaire de l'arbre par un écrou de serrage.

De tels accouplements se rencontrent souvent mais, lorsqu'ils sont utilisés pour le montage de la butée amont d'un compresseur haute pression de turbomachine, ils présentent quelques particularités.

Ainsi sur certains turboréacteurs double corps, après avoir démonté l'arbre de turbine basse pression, il est intéressant de pouvoir extraire le corps haute pression par l'arrière, sans toucher aux modules du compresseur BP ni au carter intermédiaire. Toutefois une phase de cette opération se révèle délicate et comporte un risque, au cours de l'extraction de l'arbre HP, d'introduire des efforts dans la butée et de mater les billes, ce qui peut entraîner rapidement en cours de fonctionnement, la destruction de la butée et faire courir des risques au moteur et donc à l'avion tout entier.

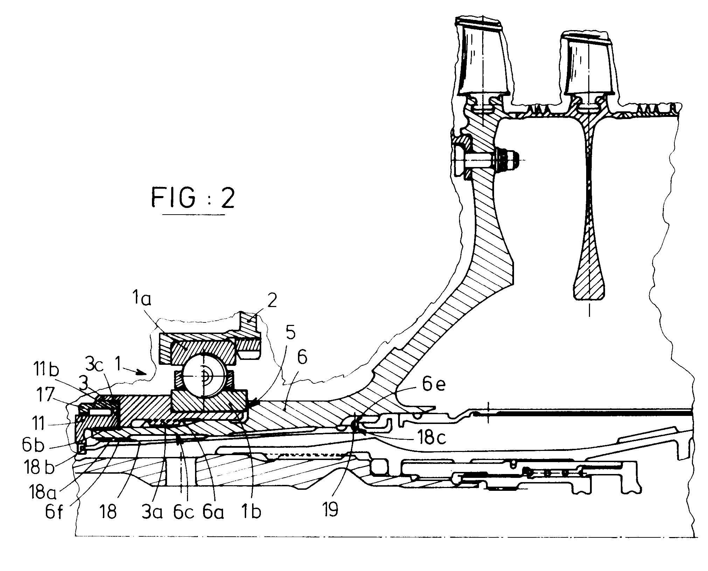

Si l'on se réfère à la figure 2 qui montre l'état actuel de la technique, on voit un palier 1 constitué d'une butée à billes dont la piste externe la est montée dans un support de palier 2 fixe et dont la piste interne 1b est montée sur un fourreau 3, serrée entre un épaulement 5 de l'arbre 6 et un écrou 11. Le fourreau 3 est monté sur l'arbre 6 du corps HP (comprenant aussi le tambour reliant les disques portant les aubes de turbine non représentées) et l'anti-rotation du fourreau 3 par rapport à l'arbre 6 est assurée au moyen de cannelures droites 3a, 6a desdites pièces coopérant entre elles.

Un écrou 11 vissé sur l'extrémité filetée 6b de l'arbre 6 permet de maintenir le serrage de la piste interne 1b de la butée 1 entre un épaulement 3b du fourreau 3 et un épaulement d'appui 5 de l'arbre 6.

L'écrou 11 comporte des encoches radialement internes 11a permettant au moyen d'une clef ad hoc 14 introduite à l'intérieur d'un alésage 6c de l'arbre 6, d'assurer le serrage ou le desserrage de l'écrou.

Lorsqu'on veut extraire l'arbre 6 et donc également tout le corps HP, on dévisse l'écrou 11 au moyen de la clef 14 comportant des dents axiales 14a venant s'engager dans les encoches 11a de l'écrou. Une fois l'écrou complètement dégagé du filetage 6b, on tire vers l'arrière l'arbre 6.

Pour parvenir à dégager les cannelures 6a de l'arbre 6 de celles 3a du fourreau 3, on est amené à exercer une traction vers l'arrière sur le corps HP et cette traction, transmise par le centrage 6d des cannelures 6a, 3a au palier 3 et à la piste interne 1b, aux billes 1c et à la piste externe 1a de la butée, peuvent marquer les billes 1c et leurs chemins de roulement 1a, 1b, et causer la détérioration du roulement.

L'invention se propose d'éviter cet inconvénient en modifiant les éléments de l'accouplement et notamment l'écrou 11 et le fourreau 3 afin de réaliser un dispositif grâce auquel les tractions exercées sur l'arbre 6 lors de son extraction, ne seront pas transmises à la butée 1, évitant ainsi la détérioration de ce roulement.

Selon l'invention, l'accouplement d'un arbre de turbomachine à l'intérieur d'un palier comportant une butée à billes insérée radialement entre ledit palier et un fourreau lui-même monté sur ledit arbre auquel il est solidarisé en rotation au moyen de cannelures droites portées respectivement par l'alésage du fourreau et par l'arbre, la bague intérieure de ladite butée étant insérée axialement entre un épaulement de l'arbre et un épaulement du fourreau, l'extrémité amont de l'arbre comporte un filetage externe sur lequel vient se visser un écrou de serrage du fourreau apte à maintenir fixe contre l'épaulement de l'arbre la bague intérieure de la butée par l'intermédiaire de l'épaulement du fourreau caractérisé en ce que ledit écrou comporte un épaulement apte à coopérer, lors du dévissage de l'écrou, avec une bague épaulée vissée sur le fourreau pour maintenir le fourreau fixe axialement au cours de l'extraction de l'arbre hors du fourreau.

L'invention se propose également de définir un procédé d'extraction hors de son logement d'un arbre selon l'accouplement décrit ci-avant.

D'autres caractéristiques de l'invention seront précisées dans la suite de la description et en regard des figures annexées parmi lesquelles :
- la figure 1 représente l'état actuel de la technique qui a été commenté ci-dessus et ne le sera pas plus dans la suite du texte ;
- la figure 2 montre le mode de réalisation de l'invention telle qu'ici revendiquée, et le positionnement de cet accouplement dans une turbomachine.

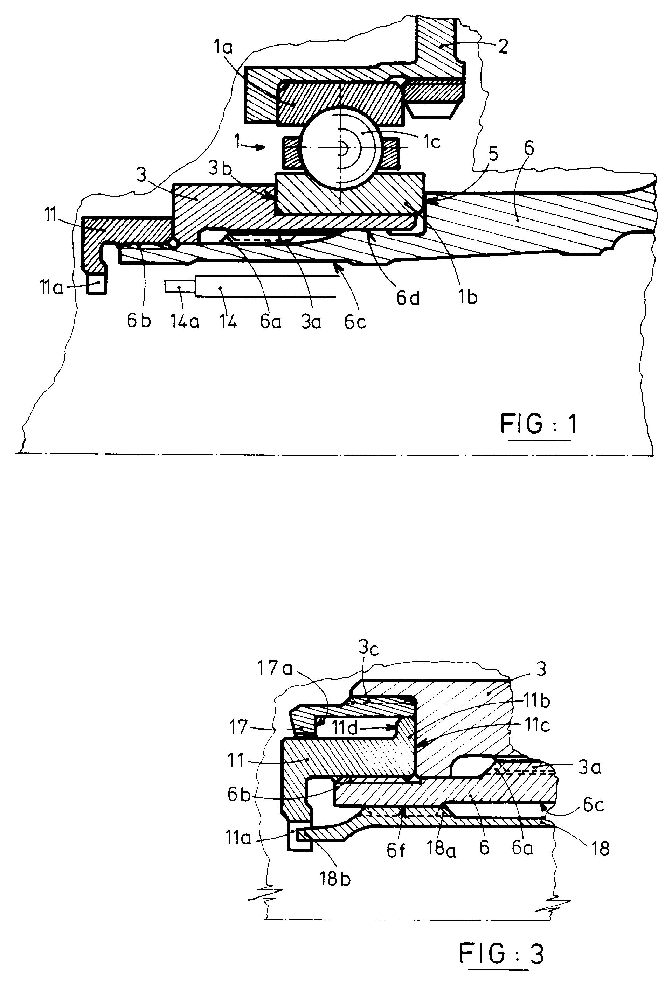

   Dans la figure 2, les éléments correspondant à ceux de la figure 1 porteront les mêmes chiffres de référence.
- la figure 3 représente à plus grande échelle le détail de l'écrou selon l'invention et de la bague épaulée avec lequel ledit écrou coopère.

Dans l'exemple de la figure 3, la piste interne 1b de la butée 1 est montée sur une portée cylindrique d'un fourreau 3 lui-même monté sur l'arbre 6 du rotor haute pression.

Le fourreau 3 est entraîné en rotation par l'arbre 6 du corps HP au moyen de cannelures droites 3a - 6a. A son extrémité avant l'arbre 6 comporte un filetage 6b sur lequel est vissé un écrou 11 modifié selon l'invention par rapport à l'état de la technique de la figure 2.

Selon l'invention, l'écrou 11, qui comporte toujours des encoches radialement internes 11a pour son vissage/dévissage, comporte maintenant également une portée cylindrique radialement externe 11b. Cette portée a deux faces planes 11c, 11d. La face 11c constitue la surface d'appui de l'écrou sur la face plane correspondante du fourreau 3 lorsque l'écrou est bloqué en position de fonctionnement et assure le serrage de la butée 1b contre l'épaulement 5 de l'arbre 6.

La face opposée 11d de l'épaulement 11b a pour fonction de coopérer, lors du dévissage de l'écrou 11, avec un épaulement 17a d'une bague épaulée 17 vissée dans un alésage taraudé 3c du fourreau 3.

Pour compléter la description structurelle de ce type d'accouplement et avant de décrire son fonctionnement, il faut encore ajouter qu'un moyen de freinage de l'écrou 11 est prévu, constitué d'une pièce tubulaire 18 disposée à l'intérieur d'un alésage 6c de l'arbre 6 et comportant des cannelures droites 18a qui coopèrent avec des cannelures internes 6f correspondantes de l'arbre 6 tandis que des dents axiales 18b du frein 18 viennent s'engager dans les encoches 11a de l'écrou 11 lors du fonctionnement de la turbomachine pour assurer l'anti-rotation de l'écrou par rapport à l'arbre.

Le frein comporte également un moyen de verrouillage axial constitué par un anneau fendu expansible 19 coopérant avec deux encoches annulaires l'une 18c du frein et l'autre 6e de l'arbre, afin d'empêcher toute translation axiale du frein 18 lors du fonctionnement.

Pour extraire le corps HP par l'aval de la turbomachine, on commence par retirer le frein 18 et pour cela, on le tire axialement pour que l'anneau 19 sorte de la gorge 6e et on translate le frein vers l'arrière jusqu'à retrait complet.

On introduit dans l'alésage 6c de l'arbre 6 une clef 14 comportant en bout des dents axiales 14a qu'on engage dans les encoches 11a de l'écrou 11 que l'on dévisse complètement. Lorsque l'écrou 11 est complètement dégagé du filetage 6b, la face 11d de son épaulement 11b vient en contact avec la face 17a de la bague épaulée 17 qui, elle, reste toujours vissée dans le filetage 3c du fourreau 3. On maintien alors la clef de desserrage 14 en position dans l'alésage 6c de l'arbre 6 et l'on maintient l'écrou 11 en appui contre la bague épaulée 17.

En même temps, on tire l'arbre 6 vers l'aval pour désengager les cannelures 6a de celles 3a du fourreau 3, au besoin en prenant appui sur la clef 14, donc sur l'écrou 11, la bague 17 et le fourreau 3 lui-même, de telle façon qu'aucun effort ne passe par la butée 1.

De ce fait, la butée 1 ne subit aucune contrainte anormale, ni radiale ni axiale, pendant l'extraction du tourillon, et les billes n'ont plus de risque de matage.

Cette solution améliore grandement la maintenance de ce type de paliers augmente beaucoup la durée de vie de la butée et réduit sa fréquence de remplacement.

## Revendications

1. Accouplement d'un arbre (6) de turbomachine à l'intérieur d'un palier (2) comportant une butée à billes (1) insérée radialement entre ledit palier (2) et un fourreau (3) lui-même monté sur ledit arbre (6) auquel il est solidarisé en rotation au moyen de cannelures (3a, 6a) droites portées respectivement par l'alésage du fourreau (3) et par l'arbre (6), la bague intérieure (1b) de ladite butée (1) étant insérée axialement entre un épaulement (5) de l'arbre (6) et un épaulement (3b) du fourreau (3), l'extrémité amont de l'arbre (6) comportant un filetage externe (6b) sur lequel vient se visser un écrou de serrage (11) du fourreau (3) apte à maintenir fixe contre l'épaulement (5) de l'arbre (6) la bague intérieure (1b) de la butée (1) par l'intermédiaire de l'épaulement (3b) du fourreau (3),
caractérisé en ce que, ledit écrou (11) comporte un épaulement (11b) apte à coopérer, lors du dévissage de l'écrou (11), avec une bague épaulée (17) vissée sur le fourreau (3) pour maintenir le fourreau (3) fixé axialement au cours de l'extraction de l'arbre (6) hors du fourreau (3).

2. Accouplement selon la revendication 1, caractérisé en ce que l'écrou (11) comporte des encoches internes radiales (11a) aptes à coopérer lors du montage avec une clef de serrage/desserrage (14) introduite dans l'alésage de l'arbre et avec des dents axiales (18b) d'un frein d'écrou (18) lors du fonctionnement de la turbomachine.

3. Accouplement selon la revendication 2, caractérisé en ce que ledit frein (18) est constitué d'une pièce tubulaire disposée à l'intérieur de l'arbre et comportant des cannelures droites (18a) coopérant avec des cannelures internes (6d) dudit arbre tandis que les dents (18b) du frein coopèrent avec les encoches (11a) de l'écrou pour assurer l'antirotation de l'écrou par rapport à l'arbre.

4. Accouplement selon la revendication 3 caractérisé en ce que le frein comporte un moyen de verrouillage axial (19, 18c, 6e) empêchant une translation axiale dudit frein en fonctionnement normal de la turbomachine.

5. Procédé d'extraction hors de son logement d'un arbre selon l'accouplement d'une des revendications 1 à 4, évitant la transmission de contraintes à son environnement, ledit arbre étant disposé à l'intérieur d'un fourreau auquel il est solidarisé en rotation au moyen de cannelures et étant maintenu bloqué par un écrou vissé sur un filetage de l'extrémité de l'arbre, ledit écrou étant en appui contre une portée dudit fourreau et étant freiné par un frein tubulaire disposé à l'intérieur de l'arbre et coopérant avec des encoches radiales de l'écrou, procédé caractérisé en ce que
1) on extrait le frein d'écrou (18) hors de l'arbre (6) ;
2) on introduit une clef (14) à l'intérieur de l'arbre (6), ladite clef (14) possédant des dents axiales (14a) venant s'engager dans les encoches (11a) de l'écrou ;
3) on dévisse l'écrou (11) et on met un épaulement (11b) dudit écrou en appui contre une bague épaulée (17) elle-même vissée dans une portée taraudée (3c) du fourreau (3) ;
4) on extrait l'arbre hors du fourreau en maintenant l'appui de l'écrou (11) contre la bague épaulée (17) au moyen de la clef (14).

## Patentansprüche

1. Kupplung einer Turbotriebwerkwelle (6) im Innern eines Lagers (2), mit einem Axialkugellager (1), das in radialer Richtung zwischen dem genannten Lager (2) und einer Buchse (3) eingesetzt ist, die ihrerseits auf der Welle (6) montiert ist, mit der sie mittels gerader Keilnuten (3a, 6a), die durch die Bohrung der Buchse (3) bzw. über die Welle (6) verlaufen, drehfest verbunden ist, wobei der Innenring (1b) des Axialkugellagers (1) in axialer Richtung zwischen einer Schulter (5) der Welle (6) und einer Schulter (3b) der Buchse (3) angeordnet ist, wobei der stromaufwärtige Endbereich der Welle (6) ein Außengewinde (6b) trägt, auf das eine Mutter (11) zum Spannen der Buchse (3) aufgeschraubt wird, die den Innenring (1a) des Axialkugellagers (1) über die Schulter (3b) der Buchse (3) fest gegen die Schulter (5) der Welle (6) drückt,
**dadurch gekennzeichnet,**
daß die Mutter (11) eine Schulter (11b) besitzt, die beim Abschrauben der Mutter (11) mit einem auf die Buchse (3) aufgeschraubten Schulterring (17) zusammenwirkt, um die Buchse (3) während des Herausziehens der Welle (6) aus der Buchse (3) in axialer Richtung fixiert zu halten.

2. Kupplung nach Anspruch 1, dadurch gekennzeichnet, daß die Mutter (11) innere radiale Ausschnitte (11a) aufweist, die bei der Montage mit einem in die Bohrung der Welle eingeführten Spann/Lockerungsschlüssel (14) und während des Betriebs des Turbotriebwerks mit axialen Zähnen (18b) einer Schraubensicherung (18) zusammenwirken.

3. Kupplung nach Anspruch 2, dadurch gekennzeichnet, daß die Schraubensicherung (18) aus einem im Innern der Welle angeordneten rohrförmigen Teil besteht, das gerade Keilnuten (18a) besitzt, die mit inneren Keilnuten (6d) der Welle zusammenwirken, und daß die Zähne (18b) der Schraubensicherung mit den Ausschnitten (11a) zusammenwirken, um die Mutter gegen eine Drehung relativ zu der Welle zu sichern.

4. Kupplung nach Anspruch 3, dadurch gekennzeichnet, daß die Schraubensicherung ein Mittel (19, 18c, 6e) zur axialen Verriegelung aufweist, das eine axiale Translationsbewegung der Schraubensicherung im Normalbetrieb des Turbotriebwerks verhindert.

5. Verfahren zum Herausziehen einer Welle aus ihrer Aufnahme für eine Kupplung nach einem der Ansprüche 1 bis 4, bei dem die Übertragung von Kräften auf ihre Umgebung vermieden wird, wobei die Welle im Innern einer Buchse angeordnet ist. mit der sie durch Keilnuten drehfest verbunden ist und auf der sie durch eine auf ein Gewinde im Endbereich der Welle aufgeschraubte Mutter blockiert wird, wobei diese Mutter sich gegen eine Auflagefläche der Buchse abstützt und durch eine im Innern der Welle angeordnete rohrförmige Schraubensicherung gesichert wird, die mit radialen Ausschnitten der Mutter zusammenwirkt,
**dadurch gekennzeichnet,** daß man
(1) die Schraubensicherung (18) aus der Welle (6) herauszieht,
(2) ins Innere der Welle (6) einen Schlüssel (14) einführt, der axiale Zähne (14a) besitzt, die in die Ausschnitte (11a) der Mutter eingreifen,
(3) die Mutter (11) herausschraubt und eine Schulter (11b) der Mutter gegen einen auf eine Gewindefläche (3c) der Buchse (3) aufgeschraubten Schulterring (17) abstützt und
(4) die Welle aus der Buchse herauszieht, wobei man die Abstützung der Mutter (11) an dem Schulterring (17) mit Hilfe des Schlüssels (14) aufrechterhält.

## Claims

1. Coupling of a turbine machine shaft (6) inside a bearing (2) comprising a thrust ball bearing (1) inserted radially between the said bearing (2) and a sheath (3) itself mounted on the said shaft (6) to which it is rotationally securely fastened by means of straight splines (3a, 6a) borne respectively by the bore of the sheath (3) and by the shaft (6), the inner ring (1b) of the said thrust bearing (1) being inserted axially between a shoulder (5) of the shaft (6) and a shoulder (3b) of the sheath (3), the upstream end of the shaft (6) comprising an external thread (6b) on which a clamping nut (11) of the sheath (3) is screwed which is able to keep the inner ring (1b) of the thrust bearing (1) fixed against the shoulder (5) of the shaft (6) by means of the shoulder (3b) of the sheath (3), characterised in that the said nut (11) comprises a shoulder (11b) able to interact, when the nut (11) is unscrewed, with a shouldered ring (17) screwed to the sheath (3) so as to keep the sheath (3) fixed axially during the extraction of the shaft (6) from the sheath (3).

2. Coupling according to Claim 1, characterised in that the nut (11) comprises radial internal notches (11a) able to interact, during assembly, with a chuck key (14) introduced into the bore of the shaft, and with axial teeth (18b) of a nut lock (18) during the operation of the turbine machine.

3. Coupling according to Claim 2, characterised in that the said nut lock (18) consists of a tubular component arranged inside the shaft and comprising straight splines (18a) interacting with internal splines (6d) of the said shaft whilst the teeth (18b) of the nut lock interact with the notches (11a) of the nut so as to prevent the rotation of the nut with respect to the shaft.

4. Coupling according to Claim 3, characterised in that the nut lock comprises an axial locking means (19, 18c, 6e) preventing an axial translation of the said lock nut during the normal operation of the turbine machine.

5. Method for removing a shaft from its housing according to the coupling of one of Claims 1 to 4, preventing the transmission of stresses to its environment, the said shaft being arranged inside a sheath to which it is rotationally securely fastened by means of splines and being held locked by a nut screwed to a thread of the end of the shaft, the said nut bearing against a bearing surface of the said sheath and being locked by a tubular nut lock arranged inside the shaft and interacting with radial notches of the nut, method characterised in that
1) the nut lock (18) is removed from the shaft (6);
2) a key (14) is introduced inside the shaft (6), the said key (14) having axial teeth (14a) coming to engage in the notches (11a) of the nut;
3) the nut (11) is unscrewed and a shoulder (11b) of the said nut is made to bear against a shouldered ring (17) itself screwed into a tapped bearing surface (3c) of the sheath (3);
4) the shaft is removed from the sheath keeping the nut (11) bearing against the shouldered ring (17) by means of the key (14).
